# DEMANDE DE BREVET EUROPEEN

(11) **EP 1 067 414 A1**
(43) Date de publication de la demande: **10.01.2001**
(21) Numéro de dépôt: 00401785.1
(22) Date de dépôt: 22.06.2000
(51) Int. Cl.: G02B 6/293, H04B 10/18

(54) **Filtre optique à fibre à rèseau de Bragg avec une réponse temps de groupe constante dans la bande utile**

(30) Priorité: 08.07.1999 FR 9908845
(71) Demandeur: ALCATEL, 75008 Paris (FR)
(72) Inventeur: Riant, Isabelle, 91400 Orsay (FR); Sansonetti, Pierre, 91120 Palaiseau (FR)
(74) Mandataire: Smith, Bradford Lee

(57) **Abrégé**

Le domaine de l'invention est celui de télécommunications sur fibre optique, multiplexés en longueur d'onde, et plus particulièrement celui des filtres optiques à bande étroite pour le multiplexage dense. L'invention propose un filtre optique bande étroite avec une réponse de temps de groupe très plate dans la bande utile, obtenue par la concaténation de deux réseaux de Bragg (FBGA et FBGB) ayant des temps de groupe linéaires en fonction de la longueur d'onde dans la bande utile, mais avec leurs pentes de signe opposé. Le signal de sortie est fourni par le circulateur (C3) via la port (P4) sur le guide (Gout), toujours avec la double influence sur le temps de groupe des chirps linéaires de pentes opposées impartis par les deux filtres (FGBA et FBGB). Quand ces deux pentes s'additionnent, elles s'annulent, et le signal de sortie aura une pente nulle, c'est-à-dire que le temps de groupe est plat dans la bande du filtre.

## Description

Le domaine de l'invention est celui de télécommunications sur fibre optique. Afin d'accroître la capacité des systèmes de télécommunications sur fibre optique, une tendance actuelle est l'utilisation simultanée d'un certain nombre de canaux de transmission sur des longueurs d'onde légèrement différentes, selon un schéma appelé multiplexage en longueur d'onde ou WDM (acronyme anglais pour Wavelength Division Multiplex). Parmi les différents composants nécessaires pour la réalisation d'un tel système multiplexé en longueur d'onde, les multiplexeurs optiques sont essentiels, pour permettre l'insertion et/ou l'extraction des signaux optiques sur la ligne de transmission (fibre optique) à une longueur d'onde donnée.

Ces filtres sont connus de l'homme de l'art sous l'acronyme anglophone OADM ("optical add-drop multiplexer"), terme que nous utiliserons dans toute la suite de la description.

Un OADM peut être réalisé par la concaténation de deux fonctions : i) sélection de la longueur d'onde (filtre), et ii) couplage entre la ligne de transmission et une dérivation entrée / sortie de celle-ci. Ces deux fonctions peuvent être réalisées par un seul composant optique (coupleur à fibre avec un réseau de Bragg dans la région de couplage) ou par un assemblage de plusieurs composants (filtre Bragg, et circulateur optique par exemple). Dans les systèmes WDM avec un grand nombre de canaux ayant un faible espacement en longueur d'onde (DWDM - dense WDM en anglais), les filtres optiques doivent être très étroits (∼ 0.2 nm) avec des flancs raides (≤ 0.1 nm).

Un problème rencontré quand de tels filtres sont réalisés par l'inscription d'un réseau de Bragg dans une fibre optique, est une forte augmentation de la dispersion chromatique en bordure de bande utile du filtre. La trop forte dispersion chromatique entraîne l'élargissement inacceptable des impulsions optiques et des pénalités de transmission, et impose une limite inférieure à l'espacement des canaux WDM, donc une limite supérieure sur le nombre de canaux qui peuvent être transmis dans une largeur de bande donnée.

Le document D1 = G. Nykalak et al. , "Impact of fiber grating dispersion on WDM system performance", OFC '98 Technical Digest, paper TuA3, pp. 4-5 (1988) démontre ce problème de façon expérimentale, avec la conclusion que la dispersion chromatique en bordure de bande des filtres FBG (Fiber Bragg Grating en anglais) peut être préjudiciable pour la capacité d'un système DWDM, car elle impose une limitation sur le rapport entre la largeur des canaux WDM et leur espacement (utilisation spectrale).

Une solution partielle à ce problème en bord de bande est proposée dans le document D2 = M. Ibsen et al. , "Optimised square passband fibre Bragg grating filter with flat group delay response," Elec. Lett. 34 (8) pp. 800-802. (16 April 1998). Selon l'enseignement de D2, le profil d'indice de réfraction est modulé selon une fonction "sinc" (x ⁻¹sin x) tronquée (car d'une longueur finie). Une apodisation Gaussienne permet de s'affranchir, au moins en partie, du "phénomène de Gibbs." A savoir une augmentation de la réflectivité du réseau Bragg en bord de bande.

Un autre enseignement de l'art antérieur concerne la concaténation de deux filtres Bragg non-linéaires pour la compensation d'une dispersion d'ordre élevé. D3 = T KOMUKAI et al. , OFC '98 technical digest, pp. 71-72 séance TuM2, (1998), propose, pour élargir la bande utile des compensateurs de dispersion, en particulier de troisième ordre, de faire une concaténation de filtres Bragg avec des "chirps" non-linéaires inversés. "Chirp" est le mot anglais utilisé par l'homme du métier pour désigner une variation monotone du temps de groupe avec la longueur d'onde. Ceci peut être obtenu par une variation du pas du réseau de Bragg le long du filtre. Une concaténation de filtres avec des chirps inversés veut dire que le temps de groupe va croître avec la longueur d'onde dans l'un des filtres, et décroître dans l'autre.

Les deux solutions proposées dans les documents D2 et D3 demeurent difficiles à réaliser de façon industrielle, d'où le besoin de trouver une solution plus facile de mise en oeuvre.

La présente invention a pour but de pallier les problèmes présentés par les solutions connues de l'art antérieur, soit au niveau des performances obtenues, soit au niveau de la difficulté de la mise en oeuvre sur l'échelle industrielle.

A ces fins, l'invention propose un dispositif de filtre optique à réseaux de Bragg, à large bande utile, ayant un délai de groupe plat dans la bande utile, selon la revendication 1. Selon la revendication 1, il y a deux réseaux Bragg en série, chacun ayant un chirp linéaire (approximativement) dans le sens contraire selon la longueur du filtre.

Selon une réalisation particulière, les deux filtres Bragg sont reliés entre un port d'entrée et un port de sortie successivement à l'aide d'un circulateur optique quatre ports.

Selon une autre réalisation, les deux filtres Bragg sont reliés entre le port d'entrée et le port de sortie par deux circulateurs optiques trois ports reliés entre eux par un guide optique.

D'autres caractéristiques et avantages de l'invention apparaîtront à la lecture de la description détaillée qui suit, avec ses figures annexées, dont :
- La figure 1 (D1 fig. 2) montre les pertes en bordure de la bande utile pour un filtre Bragg à bande étroite selon l'art antérieur ;
- La figure 2 (D2 fig. 1) montre le profil des variations d'indice de réfraction d'un filtre Bragg à bande étroite réalisé avec une modulation en x⁻¹sin(x) autour du centre du filtre, et le profil d'une apodisation Gaussienne appliquée à ce profil en x⁻¹sin(x) pour obtenir une réponse plate dans la bande utile selon l'art antérieur ;
- La figure 3 (D3 fig. 1) montre schématiquement la concaténation de deux filtres Bragg ayant des chirps non-linéaires selon l'art antérieur ;
- La figure 4 (D3 fig. 2) montre les chirps non-linéaires utilisés dans l'expérience de D3 illustré par la figure précédente ;
- La figure 5 montre schématiquement les chirps des deux filtres Bragg selon l'invention ;
- La figure 6 montre la dispersion résultante de la concaténation de deux filtres Bragg selon la figure précédente ;
- La figure 7 montre schématiquement une réalisation préférée de l'invention.

Sur toutes les figures les mêmes références désignent les mêmes éléments. L'échelle n'est pas toujours respectée pour des raisons de clarté.

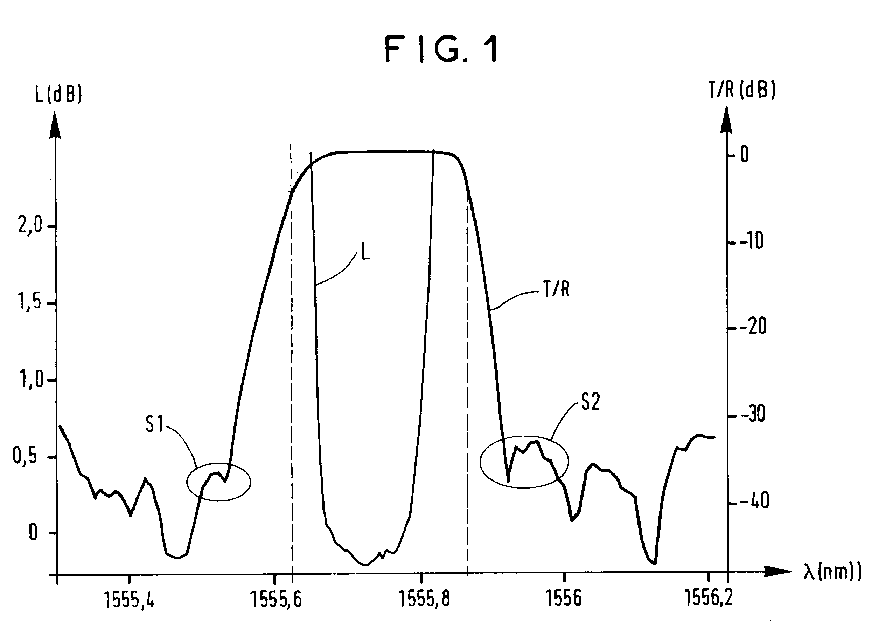

Sur la figure 1, sur l'échelle de gauche, la courbe (L) montre les pertes en dB en fonction de la longueur d'onde centrale d'une onde en propagation dans un filtre Bragg étroit, pour un taux d'erreur de 10⁻⁹ à 10 Gbit/s. Sur l'échelle de droit, on voit le spectre de réflexion (T/R) du même filtre, exprimée par le rapport entre transmission et réflexion en dB. En pointillés, on voit la largeur du filtre à -3dB. Par la superposition de ces deux courbes, comparée avec la largeur à -3dB, on constate que les pertes deviennent importantes en bordure de la bande utile, et peuvent même être pénalisantes à l'intérieur de la bande de transmission du réseau de Bragg.

Par ailleurs, on constate la présence de chaque coté de la bande utile, des remontées de transmission S1 et S2, qui sont susceptibles de perturber des transmissions sur canaux avoisinants dans un système DWDM.

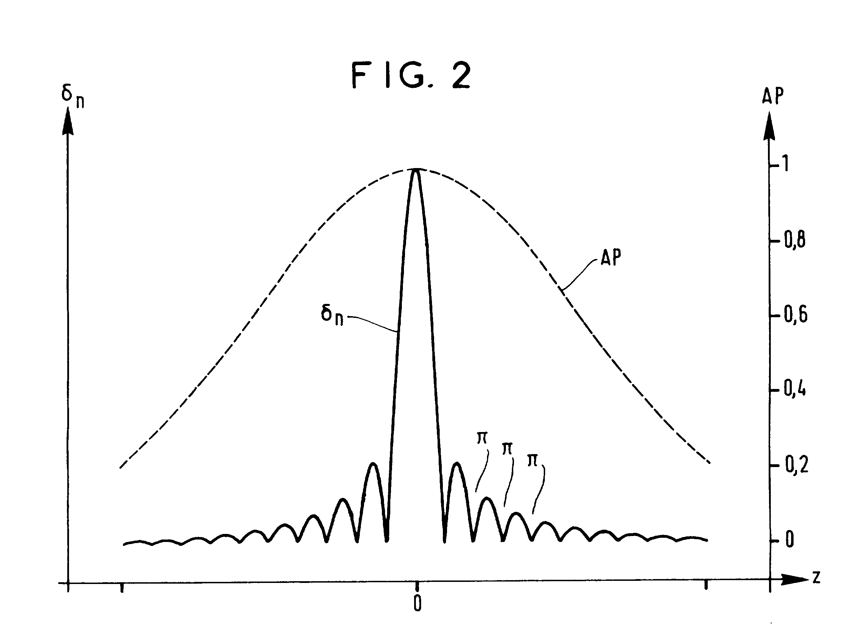

Sur la figure 2, on voit un exemple des variations δₙ d'indice de réfraction d'un réseau de Bragg en x⁻¹sin(x), avec x = pπz, p entier, apodisé avec une fonction Gaussienne AP de forme exp(-a²z²) montrée en pointillés. L'apodisation est introduite pour minimiser l'effet de la longueur finie du réseau de Bragg, et ainsi d'obtenir un filtre ayant des flancs plus raides dans son spectre de réflexion. Pour obtenir l'effet équivalent à des régions alternées d'indice positif et "négatif", un déphasage de π est introduit à chaque minimum d'indice de réfraction lors de la fabrication du réseau de Bragg, tel que montré sur la figure 2.

Le temps de groupe mesuré par les auteurs de D2 sur un filtre ayant les caractéristiques montrées schématiquement sur la figure 2 est relativement plat sur une partie importante de la bande utile du filtre Bragg. Néanmoins, la variation du temps de groupe en bordure de bande utile demeure importante, et introduit une dispersion chromatique dommageable pour la qualité des transmissions DWDM. La qualité sera paramétrée par le taux d'erreur des transmissions ; leur débit ; la distance entre répéteurs ou entre un émetteur et le récepteur dans une liaison sans répéteur ; et le nombre de canaux WDM par unité spectrale, ce qui dépend de la largeur et de l'espacement des canaux en longueur d'onde.

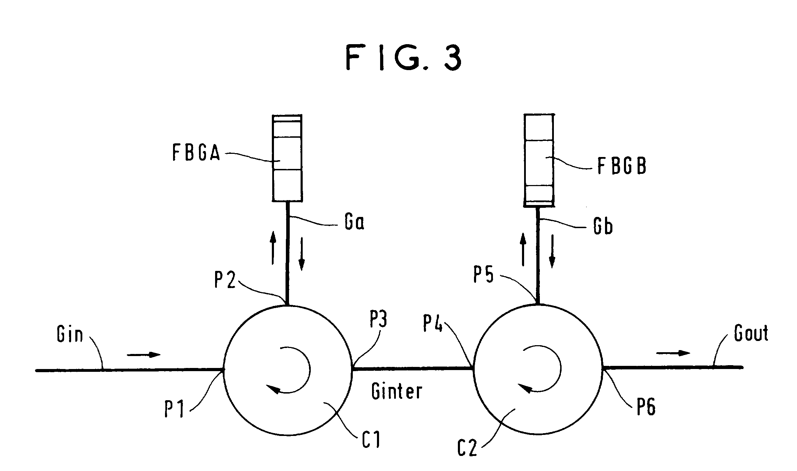

La figure 3 montre schématiquement la concaténation de deux filtres Bragg ayant des chirps non-linéaires selon l'art antérieur tel que décrit dans le document D3. Le signal lumineux rentre via le guide optique Gin dans le premier circulateur optique trois ports C1 par le port P1 et le circulateur C1 fournit ce signal en sortie via le port P2 sur le guide Ga. Le signal est réfléchi par le premier filtre FBGA, dans la bande du filtre, et revient vers le port P2 via le même guide Ga avec le temps de groupe qui est imparti par le chirp non-linéaire du filtre FBGA. Ce signal chirpé traverse le circulateur C1 ; il est ensuite acheminé en sortie via la port P3 sur le guide Ginter et rentre via la port P4 dans le deuxième circulateur trois ports C2, d'où il sort par la port P5 sur le guide Gb vers le deuxième filtre Bragg FBGB. Ce deuxième filtre Bragg FBGB est chirpé non-linéaire en sens inverse par rapport au premier filtre FBGA. Le signal est réfléchi par ce deuxième filtre FBGB sur le guide Gb vers la port P5 du circulateur C2, avec un temps de groupe qui comporte la double influence des chirps non-linéaires impartis par les deux filtres FBGA et FBGB. Le signal de sortie est fourni par le circulateur C2 via la port P6 sur le guide Gout, toujours avec la double influence sur le temps de groupe des chirps non-linéaires impartis par les deux filtres FBGA et FBGB.

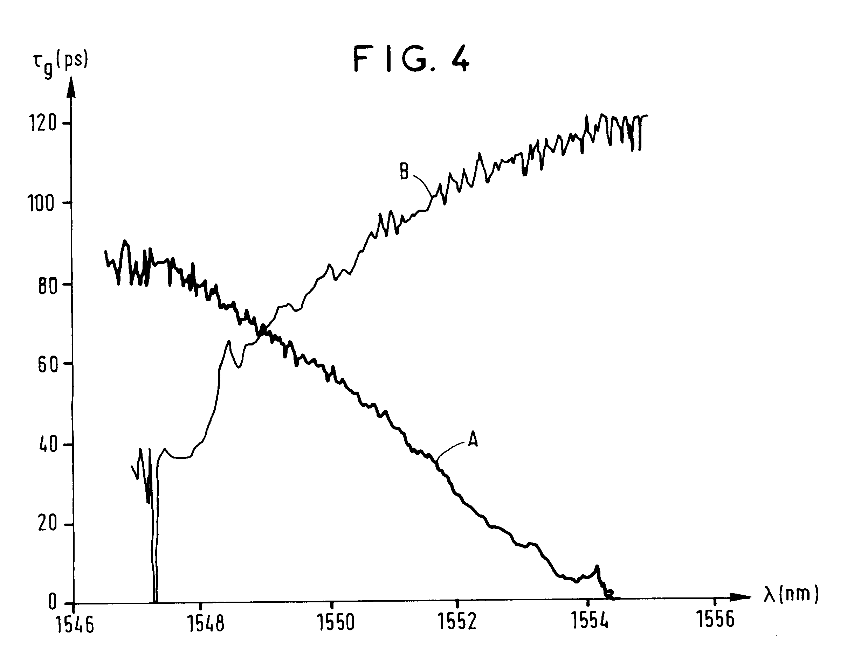

La figure 4 montre les mesures de temps de groupe effectuées sur les filtres FBGA et FBGB dans l'expérience du document D3. La courbe A correspond au chirp non-linéaire imparti par le filtre FBGA de la figure 3, et la courbe B correspond au chirp non-linéaire imparti par le filtre FBGB. Le chirp mesuré, mis à part les oscillations dues, selon les auteurs, à une apodisation imparfaite en x⁻¹sin(x), est parabolique (quadratique) de forme.

La caractéristique de temps de groupe résultant de la concaténation de ces deux filtres présente une amélioration vis-à-vis des autres solutions connues de l'art antérieur, mais comporte des oscillations, ainsi qu'une pente non-nulle de temps de groupe en fonction de la longueur d'onde en bordure de bande utile. D'autre part, la réalisation de tels filtres à l'unité est très délicate, et risque de devenir aléatoire sur l'échelle industrielle.

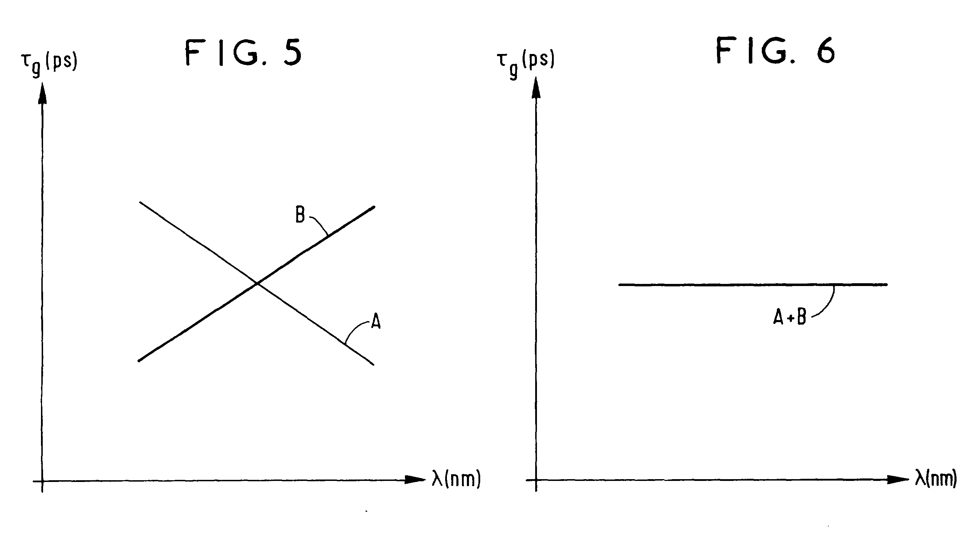

Pour pallier les inconvénients des réalisations de l'art antérieur, l'invention propose la concaténation de deux filtres ayant des chirps opposés, caractérisée en ce que les deux chirps sont approximativement linéaires et de pente équivalente, mis à part le signe de cette dernière. Ces chirps sont illustrés schématiquement sur la figure 5, et le chirp résultant de la concaténation des deux filtres est montré sur la figure 6.

La figure 5 montre les temps de groupe en fonction de la longueur d'onde des filtres FBGA et FBGB selon l'invention. La courbe A correspond à un chirp quasiment linéaire ayant une pente par exemple de l'ordre de 10 ps/nm. La courbe B correspond a un chirp quasiment linéaire ayant une pente par exemple de l'ordre de -10 ps/nm.

La caractéristique de temps de groupe résultant de la concaténation de ces deux filtres présente un temps de groupe quasi uniforme dans toute la bande utile du filtre, tel que montré schématiquement sur la figure 6.

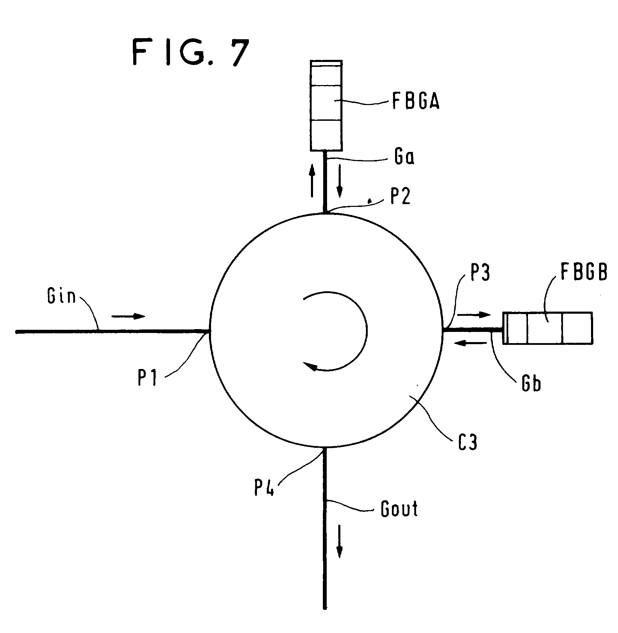

Les filtres FBGA et FBGB de chirp linéaire peuvent être reliés de la même manière que les filtres chirpés non-linéaire connu de l'art antérieur, à l'aide de deux circulateurs optiques trois ports tel que montré sur la figure 3. Ou encore, ils peuvent être reliés à l'aide d'un seul circulateur optique quatre ports tel que montré sur la figure 7.

La figure 7 montre schématiquement la concaténation de deux filtres Bragg ayant des chirps linéaires selon l'invention. Le signal lumineux rentre via le guide optique Gin dans le circulateur optique quatre ports C3 par le port P1 et le circulateur C3 fournit ce signal en sortie via le port P2 sur le guide Ga. Le signal est réfléchi par le premier filtre FBGA, dans la bande du filtre, et revient vers le port P2 via le même guide Ga avec le temps de groupe qui est imparti par le chirp linéaire du filtre FBGA. Ce signal chirpé traverse le circulateur C3 ; il est ensuite acheminé en sortie via le port P3 sur le guide Gb vers le deuxième filtre Bragg FBGB. Ce deuxième filtre Bragg FBGB est chirpé linéairement en sens inverse par rapport au premier filtre FBGA. Le signal est réfléchi par ce deuxième filtre FBGB sur le guide Gb vers la port P3 du circulateur C3, avec un temps de groupe qui comporte la double influence des chirps linéaires impartis par les deux filtres FBGA et FBGB. Le signal de sortie est fourni par le circulateur C3 via la port P4 sur le guide Gout, toujours avec la double influence sur le temps de groupe des chirps linéaires de pentes opposées impartis par les deux filtres FBGA et FBGB. Quand ces deux pentes s'additionnent, elles s'annulent, et le signal de sortie aura une pente nulle, c'est-à-dire que le temps de groupe est plat dans la bande du filtre, tel que montré sur la figure 6.

L'homme de l'art imaginera facilement d'autres dispositions des composants élémentaires nécessaires à la réalisation de l'invention.

Les résultats qui peuvent être obtenus avec le dispositif de l'invention seront meilleurs que ceux obtenus avec les dispositifs de l'art antérieur.

Un autre avantage majeur d'un tel dispositif est dans la facilité de sa réalisation, car le chirp linéaire est plus facile à réaliser qu'un chirp quadratique, et beaucoup plus facile qu'une apodisation d'une fonction x⁻¹sin(x) avec des sauts de phase de π à chaque minimum . Ceci veut dire que son utilisation sur l'échelle industrielle sera facilitée par une fiabilité accrue des résultats obtenus, par un moindre coût de réalisation, et des performances meilleures.

## Revendications

1. Dispositif de filtre optique à réseaux de Bragg ayant un délai de groupe plat dans la bande utile de largeur Δλ autour d'une longueur d'onde centrale λ_{c}, ledit dispositif ayant un guide optique d'entrée (Gin), un guide optique de sortie (Gout), au moins un circulateur optique (C1, C2, C3), et deux filtre à réseaux de Bragg (FBGA, FBGB) sur guide optique (Ga, Gb) ayant une longueur d'onde centrale autour de la même longueur d'onde centrale λ_{c}, et une largeur de bande de réflexion Δλ_{B} ≥ Δλ ; ledits réseaux de Bragg (FBGA, FBGB) ayant des variations quasi périodiques Δn₁ de l'indice de réfraction selon l'axe de propagation dudit guide optique (Ga, Gb), ledits réseaux (FBGA, FBGB) ayant une variation mono tonique du pas de variation d'indice Δn₁ selon l'axe, ("chirp" en anglais), les deux réseaux de Bragg (FBGA, FBGB) ayant des caractéristiques de chirp inversées, caractérisé en ce que lesdites caractéristiques de chirp sont approximativement linéaires selon la position sur l'axe de propagation au sein de chaque réseaux, et Δλ_{B} ≈ Δλ.

2. Dispositif de filtre optique à réseaux de Bragg selon la revendication 1, caractérisé en ce que ledit circulateur optique (C3) est un circulateur quatre ports, et qu'il connecte successivement ledit guide d'entrée (Gin), lesdits deux réseaux de Bragg (FBGA, FBGB) en concaténation, et ledit guide de sortie (Gout).

3. Dispositif de filtre optique à réseaux de Bragg selon la revendication 1, caractérisé en ce que deux circulateurs optiques trois ports (C1, C2) sont connectés via un guide d'interconnexion (Ginter) pour connecter successivement ledit guide d'entrée (Gin), l'un (FBGA) desdits réseaux de Bragg, ledit guide d'interconnexion (Ginter), l'autre (FBGB) desdits réseaux de Bragg en concaténation, et ledit guide de sortie (Gout).
